# EUROPEAN PATENT APPLICATION

(11) **EP 1 207 706 A1**
(43) Date of publication of application: **22.05.2002**
(21) Application number: 00944267.4
(22) Date of filing: 05.07.2000
(51) Int. Cl.: H04Q 3/545, H04M 3/00, H04L 12/02, H04M 3/22

(54) **CALL CONTROL DEVICE**

(71) Applicant: MITSUBISHI DENKI KABUSHIKI KAISHA, Tokyo 100-8310 (JP)
(72) Inventor: KISHISHITA, Nariaki, Mitsubishi Denki K.K., Tokyo 100-8310 (JP)
(74) Representative: Sajda, Wolf E., Dipl.-Phys.
(86) International application number: JP0004470
(87) International publication number: WO0203715

(57) **Abstract**

A working call controller 11 (12) changes its operating mode to a standby mode when it is not carrying out call processing at system switching for management, and to a transient working mode when it is carrying out call processing at system switching for the management to continue the call processing. A standby call controller 12 (11) changes its operating mode to a working mode when the other call controller 11 (12) enters the standby mode, and to a transient working mode when the other call controller 11 (12) enters the transient working mode. One of the call controllers 11 and 12 in the transient working mode, receiving the call control signal of a new call, carries out the call processing of the new call exclusively.

## Description

### TECHNICAL FIELD

The present invention relates to a call control apparatus with duplexed call controllers.

### BACKGROUND ART

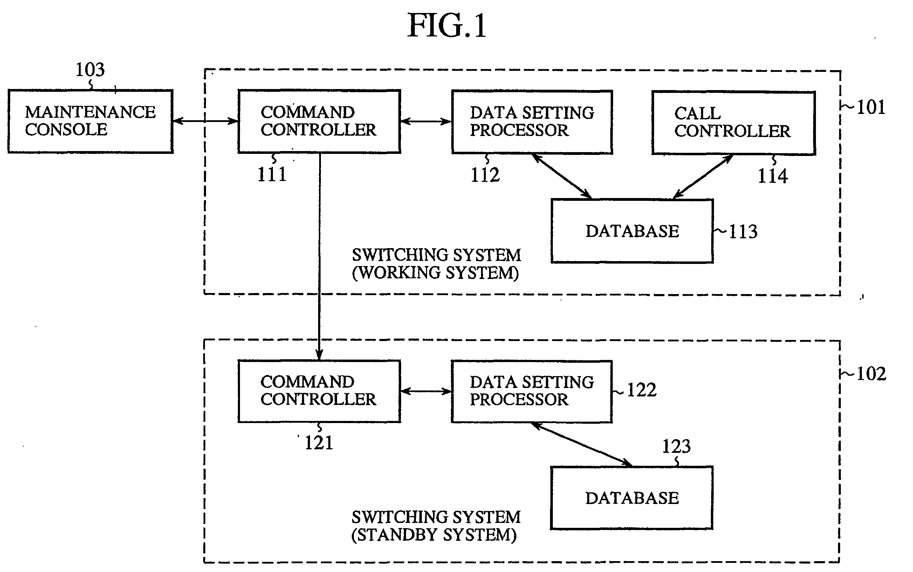

Fig. 1 is a block diagram showing a configuration of a conventional call control apparatus disclosed in Japanese patent application laid-open No. 6-177965. In this figure, the reference numeral 101 designates a switching system of a working system, 102 designates a switching system of a standby system, and 103 designates a maintenance console for inputting and outputting operation data to and from the switching system 101.

In the working switching system 101, the reference numeral 111 designates a command controller for converting the operation data supplied in the form of a character string into a command with a predetermined data format, and for supplying the maintenance console 103 with a response message to the command; 112 designates a data setting processor for storing into a database 113 operation data corresponding to a command from the command controller 111; 113 designates the database; and 114 designates a call controller for carrying out call processing and the like. In the standby switching system 102, the reference numeral 121 designates a command controller, 122 designates a data setting processor, and 123 designates a database.

Next, the operation will be described.

The working switching system 101, operating with the standby switching system 102, executes the call processing. In this case, the maintenance console 103 supplies the working switching system 101 with the operation data. When the command controller 111 of the switching system 101 receives the operation data from the maintenance console 103, the data setting processor 112 stores the operation data into the database 113. Reading the operation data stored in the database 113, the call controller 114 executes the call processing in accordance with the operation data.

When the working switching system 101 has a fault, the standby switching system 102 is switched to the working system to continue the call processing.

In the course of this, it is necessary for the call control apparatus not only to switch the working system and the standby switching system, but also to update programs and a control board. In that case, the standby switching system 102 is disconnected from the working switching system 101, followed by halting the operation of the switching system 102, and by starting the switching system 102 after carrying out various updates. In this condition, the maintenance console 103 supplies the command controller 111 of the working switching system 101 with new operation data to be set in the database 123 of the standby switching system 102. Receiving the operation data, the command controller 111 of the working switching system 101 transfers the operation data to the command controller 121 of the standby switching system 102. The command controller 121 of the standby switching system 102 receives the operation data, and stores the operation data to the database 123 via the data setting processor 122. -Afterward, the switching system 102 is switched to the working system, and the switching system 101 is switched to the standby system.

With the foregoing configuration, the conventional call control apparatus has a problem of making it difficult to process a call occurring during the system switching control, and hence to prevent call loss.

In addition, although it will be possible for the working system to transfer call information to the standby system so that the standby system takes over the call information of the working system, considering that the condition of the call can change during the transfer, it is necessary to carry out the transfer processing of the call information in parallel with the update of the call information transferred. This presents another problem of making it difficult to carry out high-speed system switching.

The present invention is implemented to solve the foregoing problems. Therefore, an object of the present invention is to provide a call control apparatus capable of carrying out the system switching at high speed without losing any calls occurring during the system switching, by causing a working call controller to change its operating mode from a working mode to a standby mode when it is not carrying out call processing at system switching for management, and by causing a standby call controller to monitor the operating mode of the other call controller, and to change its operating mode from a standby mode to a working mode when the other call controller changes its operating mode to the standby mode.

The object of the present invention to provide a call control apparatus capable of carrying out the system switching at high speed without losing any calls occurring during the system switching can also be implemented by causing the working call controller to change its operating mode from a working mode to a transient working mode to continue the call processing when it is carrying out call processing at system switching for management, by causing the standby call controller to monitor the operating mode of the other call controller, and to change its operating mode from a standby mode to a transient working mode when the other call controller changes its operating mode from the working mode to the transient working mode, and by causing the call controllers in the transient working mode that receive a call control signal of a new call to decide one of them to carry out the call processing of the new call.

Another object of the present invention is to provide a call control apparatus capable of performing system switching smoothly at high speed by causing a call controller to check, when carrying out call processing at system switching because of a failure, call information about a call currently undergoing call processing, and by causing it to replace, if the call information is incomplete, the incomplete call information with complete call information.

### DISCLOSURE OF THE INVENTION

According to a first aspect of the present invention, there is provided a call control apparatus comprising duplexed call controllers, wherein a working call controller carries out, when receiving a call control signal, processing in accordance with the call control signal, and changes its operating mode from a working mode to a standby mode when it is not carrying out call processing at system switching for management; and a standby call controller monitors the operating mode of the other call controller, and changes its operating mode from a standby mode to a working mode when the other call controller changes its operating mode to the standby mode. Thus, it offers an advantage of being able to achieve the system switching at high speed without losing any calls occurring during the system switching.

According to a second aspect of the present invention, there is provided a call control apparatus comprising duplexed call controllers, wherein a working call controller carries out, when receiving a call control signal, processing in accordance with the call control signal, and changes its operating mode from a working mode to a transient working mode to continue the call processing when it is carrying out call processing at system switching for management; a standby call controller monitors the operating mode of the other call controller, and changes its operating mode from a standby mode to a transient working mode when the other call controller changes its operating mode from the working mode to the transient working mode; and the call controllers in the transient working mode that receive a call control signal of a new call decide one of them to carry out the call processing of the new call. Thus, it offers an advantage of being able to achieve the system switching at high speed without losing any calls occurring during the system switching.

Here, one of the call controller in the transient working mode, receiving a call control signal of a new call, may send a request for processing approval for the new call to the other call controller, and carry out the call processing of the new call when it receives the processing approval from the other call controller; and the other call controller in the transient working mode, receiving the request for the processing approval for the new call, may send the processing approval when it is not carrying out the call processing of the new call. Thus, it offers an advantage of enabling one of the call controllers in the transient working mode to carry out the processing of the new call exclusively.

The one of the call controllers in the transient working mode, receiving the processing approval from the other call controller, may carry out call processing of a new call received thereafter; and the other call controller in the transient working mode may ignore, when sending the processing approval, a new call occurring after sending the processing approval.

When receiving a call control signal of a new call, the one of the call controllers in the transient working mode may send a request for the processing approval for the new call to the other call controller after a predetermined delay time has elapsed. Thus, it offers an advantage of being able to achieve the system switching smoothly at high speed without call loss.

When receiving a call control signal of a new call, the one of the call controllers in the transient working mode may send a request for the processing approval for the new call to the other call controller after completing current call processing.

The one of the call controllers may ignore a new call occurring after a predetermined time period has elapsed from a time when its operating mode enters the transient working mode. Thus, it offers an advantage of enabling the previous working call controller to complete the call processing in a short time even if request for the call processing from the higher level apparatus causes congestion, and hence to limit the delay of the system switching.

The call control apparatus may further comprise a call processing management section for selecting, when receiving a call control signal of a new call, one of the two call controllers in the transient working mode as the call controller that carries out the call processing of the new call. Thus, it offers an advantage of being able to achieve the processing of the new call exclusively by-one of the call controllers in the transient working mode.

When each of the call controllers in the transient working mode receives the call control signal of a new call, it may send a request for processing approval for the new call to the call processing management section, and when it receives processing approval from the call processing management section, it may carry out the call processing of the new call, and when it receives processing disapproval from the call processing management section, it may ignore the new call; and the call processing management section may send, when receiving the request for the processing approval for the new call from the call controllers, the processing approval to the call controller that sends the request first, and may send the processing disapproval to the other call controller.

According to a third aspect of the present invention, there is provided a call control apparatus comprising duplexed call controllers, wherein one of the call controller checks, when carrying out call processing at system switching because of a failure, call information about the call currently undergoing the call processing, and if the call information is incomplete, it replaces the call information with complete call information. Thus, it offers an advantage of being able to achieve the system switching satisfactorily at high speed.

Here, the call controller may read the call information about the call currently undergoing the call processing from a higher level apparatus, and make a decision as to whether the call information undergoing the processing is incomplete or not in accordance with the read call information. Thus, it offers an advantage of being able to take over the call information about the current call processing correctly, and hence to prevent processing abnormality from occurring because of incomplete call information.

### BRIEF DESCRIPTION OF THE DRAWINGS

Fig. 1 is a block diagram showing a configuration of a conventional call control apparatus;
Fig. 2 is a block diagram showing a configuration of an embodiment 1 of a call control apparatus in accordance with the present invention;
Fig. 3 is a sequence chart illustrating the operation at the time when a working call controller is not performing call processing when such a system switching event occurs that will cause switching between the working system and the standby system;
Fig. 4 is a sequence chart illustrating the operation at the time when a working call controller is performing call processing when such a system switching event occurs that will cause switching between the working system and the standby system;
Fig. 5 is a sequence chart (1) illustrating the operation at the time when a new call occurs while both the systems are in a transient working mode;
Fig. 6 is a sequence chart (2) illustrating the operation at the time when a new call occurs while both the systems are in a transient working mode;
Fig. 7 is a sequence chart illustrating the operation at the time when a system switching occurs because of a fault in the working system;
Fig. 8 is a sequence chart illustrating the operation at the time when the call controller of an embodiment 2 of the call control apparatus in accordance with the present invention enters the transient working mode; and
Fig. 9 is a block diagram showing a configuration of an embodiment 3 of the call control apparatus in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

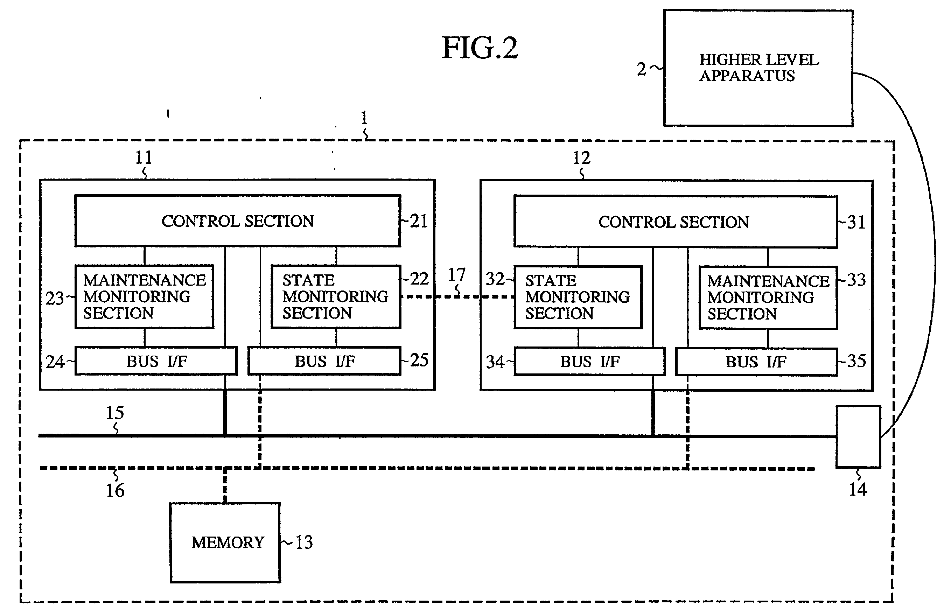

Fig. 2 is a block diagram showing a configuration of an embodiment 1 of a call control apparatus in accordance with the present invention. In this figure, the reference numeral 1 designates a call control apparatus, and 2 designates a higher level apparatus that is connected to the call control apparatus 1, and serves as a communication apparatus as the call control apparatus 1. The call control apparatus 1 is applicable to a communication apparatus such as a radio base station in a radio communication system and a switching system in a wired communication system.

In the call control apparatus 1, reference numerals 11 and 12 designate call controllers that are duplexed, transmit and receive a call control signal and a maintenance signal via a line terminator 14, and execute the call processing; reference numeral 13 designates a memory for storing call information (information such as calling and called parties) about calls that are being processed and have been completed; 14 designates the line terminator that terminates a communication line from the higher level apparatus 2 and is connected to a call control bus 15; 15 designates the call control bus connected to the call controllers 11 and 12 and line terminator 14; 16 designates a memory bus connected to the call controllers 11 and 12 and memory 3; and 17 designates a dedicated line that is connected to the call controllers 11 and 12, and is used for sending information about changes in the operating mode of the other system.

In the call controller 11, the reference numeral 21 designates a control section that carries out call control such as call processing or call disconnection in response to the call control signal when the operating mode of its own system is in the working mode, that halts the call control when the operating mode of its own system is in the standby mode, busy mode or alarm mode, and carries out the call processing in conjunction with the other system in the transient working mode when the operating mode of its own system is also in the transient working mode. The reference numeral 22 designates a state monitoring section for monitoring the control section 21 of its own system and a state monitoring section 32 of the other system to identify the operating mode of its own system and that of the other system; 23 designates a maintenance monitoring section that detects an occurrence of a system switching because of a predetermined failure, makes a decision as to whether the call information stored in the memory 3 is complete, and removes incomplete call information; 24 designates a bus interface connected to the call control bus 15; and 25 designates a bus interface connected to the memory bus 16.

In the call controller 12, the reference numeral 31 designates a control section similar to the control section 21; 32 designates a state monitoring section that monitors the control section 31 of its own system and the state monitoring section 22 of the other system to identify the operating mode of its own system and that of the other system; 23 designates a maintenance monitoring section similar to the maintenance monitoring section 23; 34 designates a bus interface connected to the call control bus 15; and 35 designates a bus interface connected to the memory bus 16.

Next, the operation will be described.

First, the operating mode of the call controllers 11 and 12 will be described. As the operating mode of the call controllers 11 and 12, there are five modes: working mode, standby mode, transient working mode, busy mode and alarm mode. The working mode refers to the operating mode that executes the call control singly. The standby mode refers to the operating mode that can make transition to the working mode, but does not carry out the call control. The transient working mode refers to the operating mode that carries out the call processing of a new call, which occurs after completing the transition to this state, in conjunction with the other system in the transient working mode. In the transient working mode, the system singly executes the call processing by itself when the other system in the transient working mode is not carrying out the call processing of the new call that occurs after completing the transition to this state. The busy mode refers to the operating mode that cannot make transition to the working mode, and does not carry out the call control. The alarm mode refers to the operating mode that cannot carry out the call control normally because of a failure of the apparatus.

When one of the call controllers 11 and 12 is in the working mode and carries out the call control, the other system is in one of the standby mode, busy mode and alarm mode, and does not carry out the call control.

When one is in the working mode and the other is in the standby mode, and a failure occurs in the working system, the working system shifts to the alarm mode, and the standby system enters the working mode. When a system switching event takes place for maintenance management in the same situation to change the operating mode of the working system to the busy mode, the operating mode of the working system enters the transient working mode, and the operating mode of the standby system also enters the transient working mode, and then, the operating mode of the working system is shifted to the busy mode, and the operating mode of the standby system is shifted to the working mode. In addition, when a system switching event takes place for maintenance management in the same situation to exchange the working system and the standby system, the operating mode of the working system enters the transient working mode, and the operating mode of the standby system also enters the transient working mode, and then, the operating mode of the working system is shifted to the standby mode, and the operating mode of the standby system is shifted to the working mode. The operating mode is thus shifted according to the failure or the system switching for the management.

Next, the operation of the call controllers 11 and 12 in the respective operating modes will be described.

In the working mode, receiving the call control signal by the control section 21 (31) via the communication line, line terminator 14 and call control bus 15, the call controller 11 (12) carries out the call control with storing the call information based on the call control signal into the memory 13 via the memory bus 16. Thus, in response to the call control signal, the call processing or call disconnection is carried out. Here, the call processing refers to processing that establishes a communication path by transmitting and receiving a control signal to and from the higher level apparatus 2, and the call disconnection refers to processing that disconnects the communication path.

On the other hand, the call controller 12 (11) in one of the standby mode, busy mode and alarm mode, ignores the call control signal even when it receives it.

In the transient working mode, the call controller 11 (12) sends to the other call controller 12 (11) a request for processing approval for a new call that occurs after entering into the transient working mode, and carries out the call processing of the new call when receiving the processing approval from the other call controller 12 (11). On the other hand, the call controller 12 (11), which receives the request for the processing approval for the new call in the transient working mode, sends the processing approval when its control section 31 (21) is not carrying out the call processing of the new call. In contrast, when the control section 31 (21) is performing the-call processing, it sends processing disapproval.

Next, the operation of the call controllers 11 and 12 when the operating mode is changed at the system switching will be described. In the following description, it is assumed that the initial operating mode of the call controller 11 is the working mode, and that of the call controller 12 is the standby mode. When the initial operating mode of the call controller 12 is the working mode, and the initial operating mode of the call controller 11 is the standby mode, it is enough to exchange the operation of the call controller 11 and that of the call controller 12.

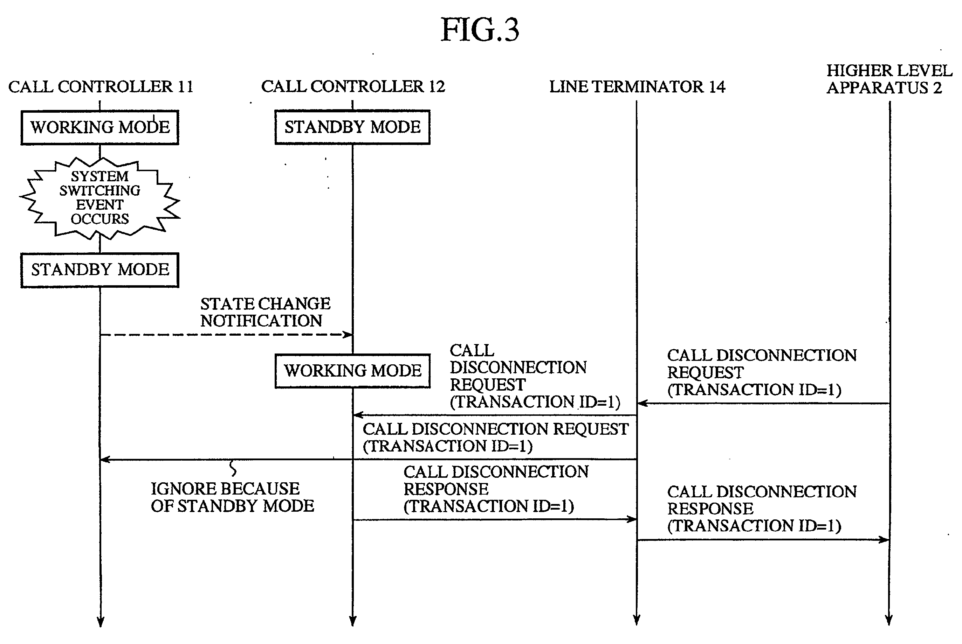

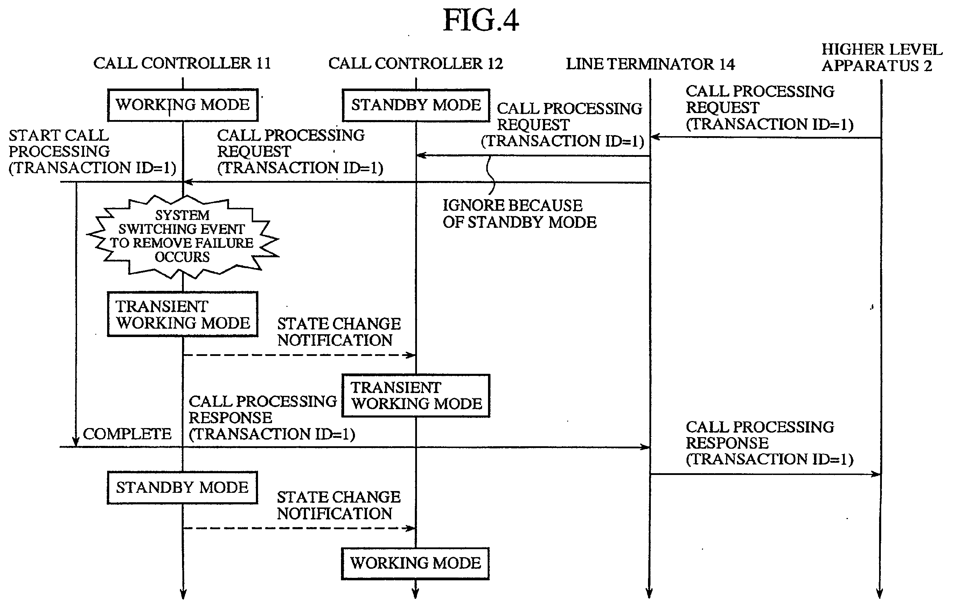

First, the operation will be described when a system switching event for maintenance management occurs to exchange the working system and the standby system. Fig. 3 is a sequence chart illustrating the operation when the working call controller 11 is not carrying out the call processing when the system switching event occurs to exchange the working system and the standby system, and Fig. 4 is a sequence chart illustrating the operation when the working call controller 11 is carrying out the call processing when the system switching event occurs to exchange the working system and the standby system.

As shown in Fig. 3, in the case where the system switching event takes place when the control section 21 of the call controller 11 is in the working mode, but not carrying out the call processing, it changes its operating mode into the standby mode immediately. Detecting the state transition, the state monitoring section 22 of the call controller 11 sends a message about the state transition to the state monitoring section 32 of the call controller 12 via the dedicated line 17. The state monitoring section 32 of the call controller 12 transfers the message about the state change to the control section 31 of the call controller 12. Detecting that the call controller 11 enters the standby mode, the control section 31 of the call controller 12 immediately changes its own operating mode to the working mode. Entering the working mode, the control section 31 of the call controller 12 reads the call information stored in the memory 3, and takes over the processing of the calls whose connections have already been established.

After completing the system switching, when the higher level apparatus 2 sends a call disconnection request for the call whose connection has already been established to the call control apparatus 1, it is supplied from the line terminator 14 to the call controllers 11 and 12 via the call control bus 15. In this case, the call controller 11 in the standby mode ignores the call disconnection request. In contrast, the call controller 12 in the working mode carries out the disconnection processing for the call disconnection request, and erases the call information stored in the memory 13.

On the other hand, when the system switching event occurs while it is in the working mode and is carrying out the call processing (transaction ID = 1) as shown in Fig. 4, the control section 21 of the call controller 11 changes its operating mode to the transient working mode, and continues the call processing. Detecting the state transition, the state monitoring section 22 of the call controller 11 sends information about the state transition to the state monitoring section 32 of the call controller 12 via the dedicated line 17. The state monitoring section 32 of the call controller 12 transfers the information about the state change to the control section 31 of the call controller 12. Detecting that the call controller 11 enters the transient working mode, the control section 31 of the call controller 12 changes its operating mode to the transient working mode.

When a new call does not occur while both the systems are in the transient working mode, the control section 21 of the call controller 11 changes its own operating mode from the transient working mode to the standby mode at the time when the current call processing is completed. Detecting the state transition, the state monitoring section 22 of the call controller 11 sends the information about the state transition to the state monitoring section 32 of the call controller 12 via the dedicated line 17. The state monitoring section 32 of the call controller 12 transfers the information about the state change to the control section 31 of the call controller 12. Detecting that the call controller 11 enters the standby mode, the control section 31 of the call controller 12 changes its operating mode to the working mode. The control section 31 of the call controller 12 entering the working mode reads the call information stored in the memory 13, and takes over a call whose connection has already been established.

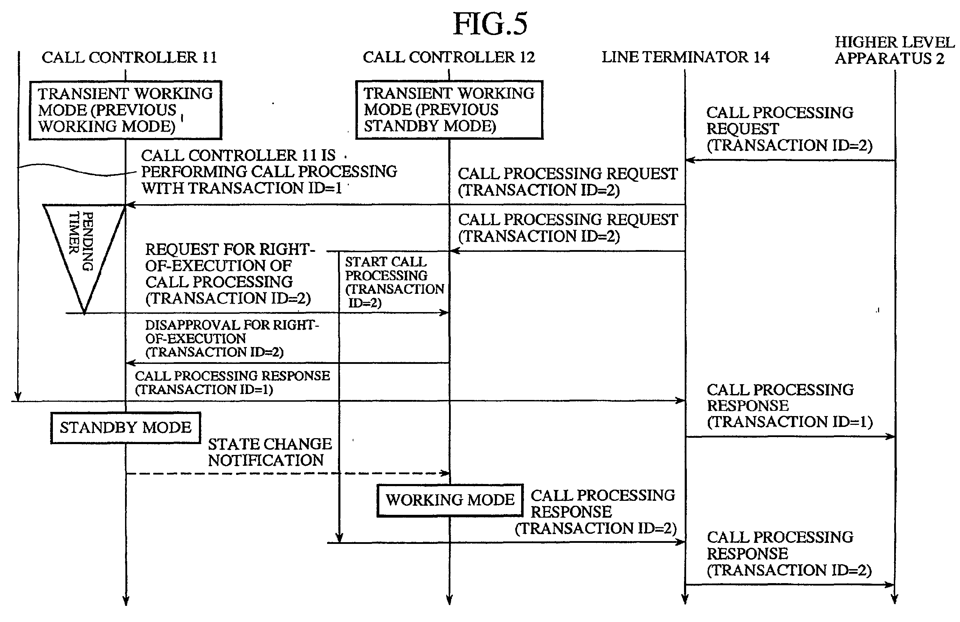

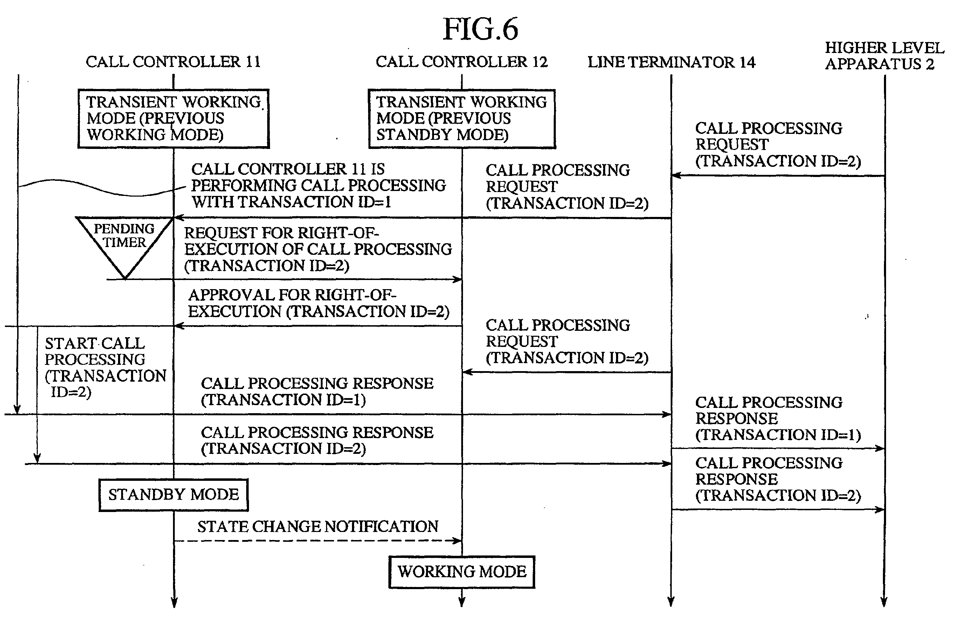

Next, a case will be described where a new call occurs while both the systems are in the transient working mode. Figs. 5 and 6 are sequence charts illustrating the operation when a new call occurs while both the systems-are in the transient working mode.

The timing at which the call processing of the new call is started in the call controllers 11 and 12 is irregular because it is affected by various factors such as the state of the receiving queue of the call control signal in the call controllers 11 and 12. Thus, as shown in Figs. 5 and 6, the previous working call controller 11, receiving a new call processing request (transaction ID = 2) in the transient working mode, starts a pending timer for counting a predetermined time period so that it transmits a right-of-execution acquisition request for the call processing (transaction ID = 2) to the call controller 12 via the state monitoring section 22 after the predetermined time period has elapsed.

Then, the state monitoring section 32 of the previous standby call controller 12 sends the processing disapproval to the call controller 11 when the control section 31 is already carrying out the call processing when it receives the right-of-execution acquisition request as shown in Fig. 5. When the state monitoring section 32 sends the processing disapproval to the call controller 11, the control section 31 of the call controller 12 carries out the call processing and call disconnection that take place thereafter in the transient working mode. Receiving the processing disapproval, the state monitoring section 22 of the call controller 11 transfers it to the control section 21 of the call controller 11. The control section 21 of the call controller 11 does not carry out that call processing, as well as the call processing or the call disconnection that will take place thereafter in the transient working mode.

On the other hand, the state monitoring section 32 of the previous standby call controller 12 sends the processing approval to the call controller 11 in the case where the control section 31 does not yet start the call processing when it receives the right-of-execution acquisition request for the new call processing (transaction ID = 2) as shown in Fig. 6. When the state monitoring section 32 sends the processing approval to the call controller 11, the control section 31 of the call controller 12 does not carry out that call processing, as well as the call processing or the call disconnection that will take place thereafter in the transient working mode. Receiving the processing approval, the state monitoring section 22 of the call controller 11 transfers it to the control section 21 of the call controller 11. The control section 21 of the call controller 11 carries out not only that call processing, but also the call processing and call disconnection that will take place thereafter in the transient working mode.

Incidentally, since both the control sections 21 and 31 can carry out the call processing of different calls in the transient working mode, they can access the memory 13 at the same time in parallel. However, it becomes possible for the control sections 21 and 31 to access the memory 13 in parallel if the bus interfaces 25 and 35 perform exclusive access control to the memory bus 16. Alternatively, dividing the memory area in the memory 13 on a call by call basis and using the divisions can prevent the other system from overwriting the call information about the current call even when the call controllers 11 and 12 are processing different calls.

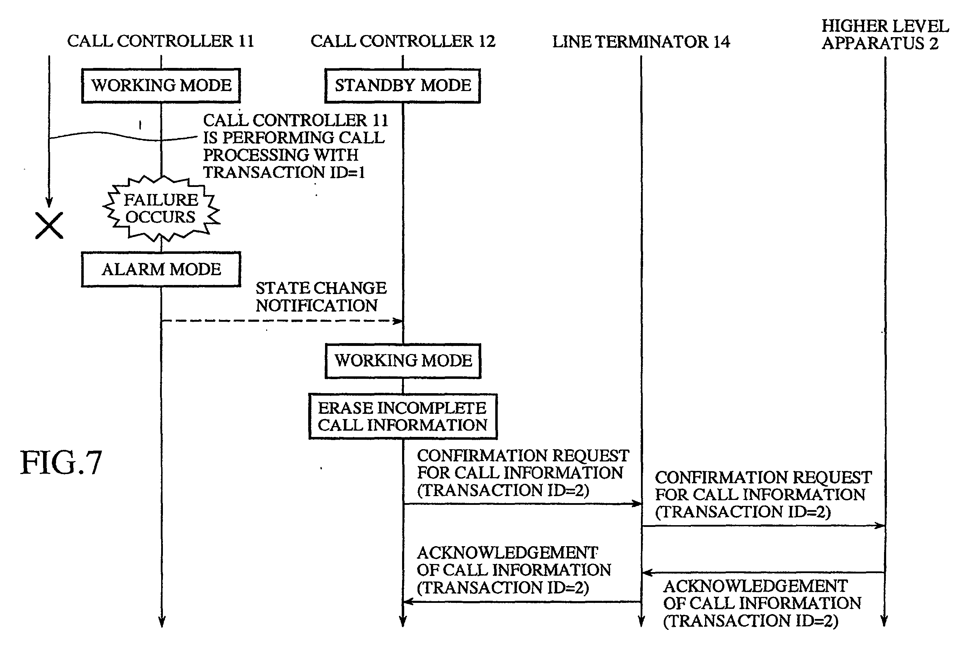

Next, the operation will be described when a system switching takes place because of a failure in the working system. Fig. 7 is a sequence chart illustrating the operation when the system switching takes place because of a failure in the working system.

When the system switching takes place because of a failure occurring in the working controller 11, the control section 21 of the call controller 11 changes its operating mode from the working mode to the alarm mode, and the state monitoring section 22 of the call controller 11 sends information about the mode change to the state monitoring section 32 of the call controller 12. Receiving the information, the state monitoring section 32 of the call controller 12 transfers it to the control section 31 and maintenance monitoring section 33.

Detecting the system switching because of the failure of the call controller 11, the maintenance monitoring section 33 of the call controller 12 makes a decision as to whether the call information stored in the memory 13 is complete or not. When the call information is incomplete, it erases it and replaces it by the call information from the higher level apparatus 2. To make a decision as to whether the call information is complete or not, the maintenance monitoring section 33 acquires the call information stored in the higher level apparatus 2 by exchanging a confirmation request of the call information and an acknowledgement (maintenance signal) of the call information with the higher level apparatus 2. Thus, it makes a decision as to the same call whether the call information stored in the memory 13 is complete or not by checking whether the call information fed from the higher level apparatus 2 is identical to the call information stored in the memory 13. On the other hand, the control section 31 of the call controller 12 changes its operating mode to the working mode as soon as it detects that the call controller 11 enters into the alarm mode. Entering the working mode, the control section 31 of the call controller 12 reads the complete call information stored in the memory 13, thereby taking over the call whose connection has already been established.

As described above, the present embodiment 1 is configured such that when the working call controller 11 (12) is not carrying out the call processing at the system switching for the management, it changes the operating mode from the working mode to the standby mode, and that the standby call controller 12 (11), which monitors the operating mode of the other call controller 11 (12), changes its operating mode from the standby mode to the working mode when the operating mode of the other call controller 11 (12) is changed to the standby mode. Thus, the present embodiment 1 offers an advantage of being able to execute the system switching at high speed without losing any call occurring during the switching.

In addition, the present embodiment 1 is configured such that when the working call controller 11 (12) is carrying out the call processing at the system switching for the management, it changes the operating mode from the working mode to the transient working mode to continue the call processing, that the standby call controller 12 (11), which monitors the operating mode of the other call controller 11 (12), changes its operating mode from the standby mode to the transient working mode when the operating mode of the other call controller 11 (12) is changed to the transient working mode, and that one of the call controllers 11 and 12 in the transient working mode, receiving a call control signal of a new call, carries out the call processing of the new call. Thus, the present embodiment offers an advantage of being able to execute the system switching at high speed without losing any call occurring during the switching.

Furthermore, the present embodiment 1 is configured such that when the call controller 11 (12) in the transient working mode receives the call control signal of a new call, it sends a request for the processing approval for the new call to the other call controller 12 (11), that when it receives the processing approval from the other call controller 12 (11), it carries out the call processing of the new call, and that the other call controller 12 (11) in the transient working mode, receiving the request for the processing approval for the new call, sends the processing approval when it is not carrying out the call processing of the new call. Thus, the present embodiment 1 offers an advantage of enabling one of the call controllers in the transient working mode to execute the processing of the new call exclusively.

In addition, the present embodiment 1 is configured such that when the call controller 11 (12) in the transient working mode receives the call control signal of a new call, it sends a request for the processing approval for the new call to the other call controller 12 (11) after a predetermined delay time. Accordingly, it is more likely that the call controller 12, which is changing its operating mode from the transient working mode to the working mode, acquires the right-of-execution of the new call than the call controller 11. Thus, the present embodiment offers an advantage of being able to execute the system switching smoothly at high speed without any call loss.

Moreover, the present embodiment 1 is configured such that when it is carrying out the call processing at the system switching because of a failure, the call controller 11 or 12 checks the call information about the call processing, and when the call information is incomplete, it replaces the call information with the complete call information. Thus, the present embodiment 1 offers an advantage of being able to execute the system switching positively at high speed.

Finally, the present embodiment 1 is configured such that the call controller 11 or 12 reads the call information about the current call processing from the higher level apparatus 2, and makes a decision as to whether the call information in the processing is incomplete or not in accordance with the read call information. Thus, the present embodiment 1 offers an advantage of being able to take over the call information about the current call processing correctly, thereby preventing processing abnormality because of incomplete call information.

### EMBODIMENT 2

The embodiment 2 of the call control apparatus 1 in accordance with the present invention is configured such that when the operating mode of the call controller 11 (12) is changed from the working mode to the transient working mode, it ignores the call processing and call disconnection of a new call occurring after a predetermined time period has elapsed from the transition. Since the configuration of the present embodiment 2 of the call control apparatus 1 is the same as that of the embodiment 1, the description thereof is omitted here.

Next, the operation will be described.

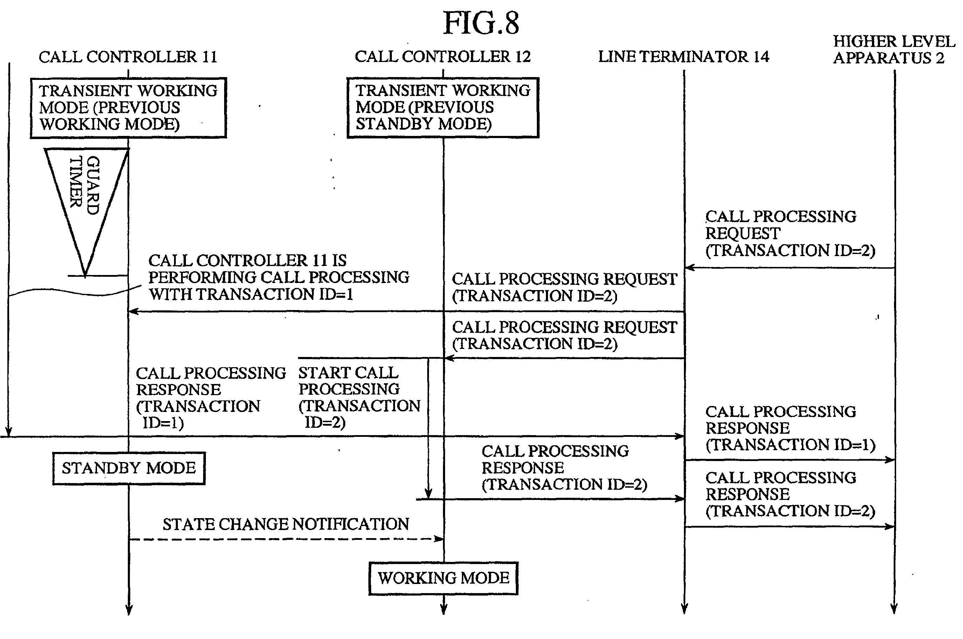

Fig. 8 is a sequence chart illustrating the operation at the time when the call controller 11 (12) of the embodiment 2 of the call control apparatus in accordance with the present invention changes its operating mode into the transient working mode.

Changing the operating mode from the working mode to the transient working mode, the call controller 11 (12) starts a guard timer at that time, causes the guard timer to count a predetermined time period, and ignores the call processing and call disconnection of a new call that occurs after the predetermined time period has elapsed. Specifically, as shown in Fig. 8, the call controller 11 starts the guard timer when it enters the transient working mode, and continues the call processing (transaction ID = 1) thereafter. Once a timeout of the guard timer occurs, the call controller 11 ignores a call processing request (transaction ID = 2) received thereafter. Thus, the call controller 12 carries out the processing of the call processing request (transaction ID = 2) received after the timeout of the guard timer. Subsequently, the call controller 11 enters the standby mode when it completes the current call processing (transaction ID = 1), and notifies the call controller 12 of the state transition. Detecting that the call controller 11 enters the standby mode from the information about the state change, the call controller 12 changes its operating mode to the working mode immediately.

Since the remaining operation is the same as that of the foregoing embodiment 1, the description thereof is omitted here.

As described above, the present embodiment 2 is configured such that when the operating mode of the call controller 11 (12) is changed from the working mode to the transient working mode, it ignores the call processing and call disconnection of a new call occurring after a predetermined time period has elapsed from the transition. Thus, the present embodiment 2 offers an advantage of enabling the previous working call controller 11 (12) to complete its call processing in a short time even if request for the call processing from the higher level apparatus causes congestion, thereby making it restrict the delay of the system switching.

### EMBODIMENT 3

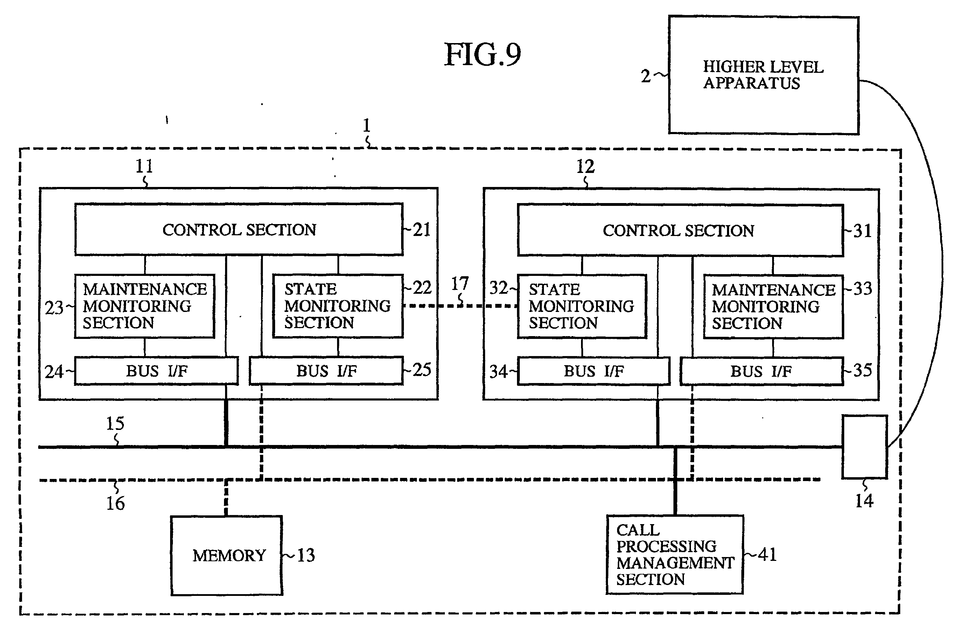

Fig. 9 is a block diagram showing a configuration of the embodiment 3 of the call control apparatus in accordance with the present invention. In this figure, the reference numeral 41 designates a call processing management section for selecting, when a new call occurs, one of the two call controllers 11 and 12 in the transient working mode as the call controller 11 (12) for carrying out the call processing of a new call. Since the remaining configuration of Fig. 9 is the same as that of the embodiment 1, the description thereof is omitted here.

Next, the operation will be described.

When a new call occurs, the call controllers 11 and 12 in the transient working mode each send a request for the right-of-execution of the call processing of the new call to the call processing management section 41. Receiving the request for the right-of-execution of the call processing from the call controllers 11 and 12, the processing management section 41 provides the processing approval to the call controller 11 (12) that sends the request for the new call first, and the processing disapproval to the other call controller 12 (11). The call controller 11 (12) that receives the processing approval from the call processing management section 41 carries out the call processing of the new call. In contrast, the call controller 12 (11) that receives the processing disapproval from the call processing management section 41 ignores the new call. As for a call occurring in the transient working mode thereafter, the call controller 11 (12) that receives the processing approval from the call processing management section 41 carries out the processing.

Since the remaining operation is the same as that of the foregoing embodiment 1 or 2, the description thereof is omitted here.

As described above, the present embodiment 3 is configured such that when the call processing management section 41 sends the call control signal of a new call to the two call controllers 11 and 12 in the transient working mode, one of them is selected as the call controller 11 (12) for carrying out the call processing of the new call. Thus, the present embodiment 3 offers an advantage of being able to execute the processing of the new call exclusively by one of the call controllers in the transient working mode.

### INDUSTRIAL APPLICABILITY

As described above, the call control apparatus in accordance with the present invention is suitable for a radio base station in a radio communication system, or for a communication apparatus such as a switching system in a wired communication system.

## Claims

1. A call control apparatus comprising duplexed call controllers, wherein
a working call controller carries out, when receiving a call control signal, processing in accordance with the call control signal, and changes its operating mode from a working mode to a standby mode when it is not carrying out call processing at system switching for management; and
a standby call controller monitors the operating mode of the other call controller, and changes its operating mode from a standby mode to a working mode when said the other call controller changes its operating mode to the standby mode.

2. A call control apparatus comprising duplexed call controllers, wherein
a working call controller carries out, when receiving a call control signal, processing in accordance with the call control signal, and changes its operating mode from a working mode to a transient working mode to continue the call processing when it is carrying out call processing at system switching for management;
a standby call controller monitors the operating mode of the other call controller, and changes its operating mode from a standby mode to a transient working mode when said the other call controller changes its operating mode from the working mode to the transient working mode; and
said call controllers in the transient working mode that receive a call control signal of a new call decide one of them to carry out the call processing of the new call.

3. The call control apparatus according to claim 2, wherein one of said call controller in the transient working mode, receiving a call control signal of a new call, sends a request for processing approval for the new call to the other call controller, and carries out the call processing of the new call when it receives the processing approval from said the other call controller; and
said the other call controller in the transient working mode, receiving the request for the processing approval for the new call, sends the processing approval when it is not carrying out the call processing of the new call.

4. The call control apparatus according to claim 3, wherein said one of said call controllers in the transient working mode, receiving the processing approval from said the other call controller, carries out call processing of a new call received thereafter; and
said the other call controller in the transient working mode ignores, when sending the processing approval, a new call occurring after sending the processing approval.

5. The call control apparatus according to claim 3, wherein when receiving a call control signal of a new call, said one of said call controllers in the transient working mode sends a request for the processing approval for the new call to said the other call controller after a predetermined delay time has elapsed.

6. The call control apparatus according to claim 3, wherein when receiving a call control signal of a new call, said one of said call controllers in the transient working mode sends a request for the processing approval for the new call to said the other call controller after completing current call processing.

7. The call control apparatus according to claim 3, wherein one of said call controllers ignores a new call occurring after a predetermined time period has elapsed from a time when its operating mode enters the transient working mode.

8. The call control apparatus according to claim 2, further comprising a call processing management section for selecting, when receiving a call control signal of a new call, one of the two call controllers in the transient working mode as the call controller that carries out the call processing of the new call.

9. The call control apparatus according to claim 8, wherein when each of said call controllers in the transient working mode receives the call control signal of a new call, it sends a request for processing approval for the new call to said call processing management section, and when it receives processing approval from said call processing management section, it carries out the call processing of the new call, and when it receives processing disapproval from said call processing management section, it ignores the new call; and
said call processing management section sends, when receiving the request for the processing approval for the new call from the call controllers, the processing approval to said call controller that sends the request first, and sends the processing disapproval to the other call controller.

10. A call control apparatus comprising duplexed call controllers, wherein
one of said call controller checks, when carrying out call processing at system switching because of a failure, call information about the call currently undergoing the call processing, and if the call information is incomplete, it replaces the call information with complete call information.

11. The call control apparatus according to claim 10, wherein the call controller reads the call information about the call currently undergoing the call processing from a higher level apparatus, and makes a decision as to whether the call information undergoing the processing is incomplete or not in accordance with the read call information.
